Europäisches Patentamt

European Patent Office

Office européen des brevets

(19)

(11) EP 0 409 605 B1

(12) **EUROPEAN PATENT SPECIFICATION**

(45) Date of publication and mention
of the grant of the patent:
**16.10.1996 Bulletin 1996/42**

(51) Int Cl.6: **G02F 1/015**, G02F 1/29

(21) Application number: **90307875.6**

(22) Date of filing: **19.07.1990**

(54) **Semiconductor optical device having a variable refractive index profile**

Optische Halbleitervorrichtung mit verstellbarem Brechungsindexprofil

Dispositif optique semiconducteur à profil d'index de réfraction variable

(84) Designated Contracting States:
**DE FR GB**

(30) Priority: **19.07.1989 JP 184782/89**

(43) Date of publication of application:
**23.01.1991 Bulletin 1991/04**

(73) Proprietor: **FUJITSU LIMITED**
**Kawasaki-shi, Kanagawa 211 (JP)**

(72) Inventor: **Tabuchi, Haruhiko**
**Sagamihara-shi, Kanagawa, 228 (JP)**

(74) Representative:
**Fane, Christopher Robin King et al**
**HASELTINE LAKE & CO.**
**Hazlitt House**
**28 Southampton Buildings**
**Chancery Lane**
**London, WC2A 1AT (GB)**

(56) References cited:
**WO-A-84/02782**          **US-A- 3 790 853**
**US-A- 3 894 792**

• **SOVIET INVENTIONS ILLUSTRATED. Derwent Publications Ltd. Section ElectricalWeek B17 Abstract number D7823, B17 June 8, 1979 & SU-A - 611 167**
• **PATENT ABSTRACTS OF JAPAN vol. 8, no. 242 (P-311)(1679) November 7, 1984 & JP-A-59 116 612**

## Description

The present invention relates to a semiconductor optical device having a variable refractive index profile.

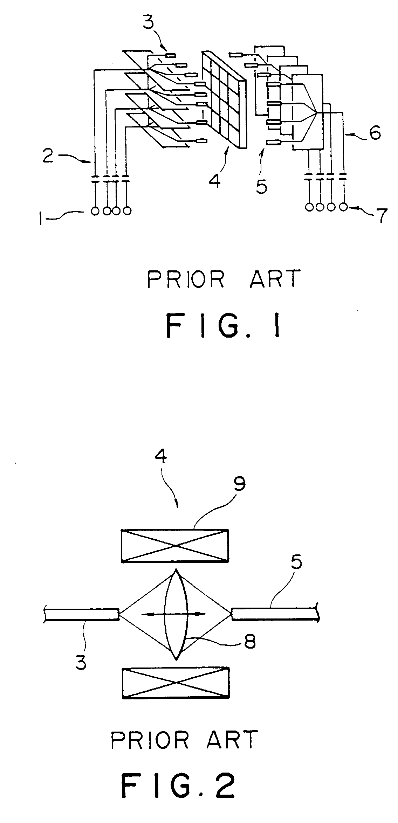

With the development of optical telecommunication using optical fibres as a means for transmitting information, the need for various high speed optical switching devices is becoming acute. For example, the concept of an optical switching system shown in Fig. 1 is proposed, wherein light beams produced by a semiconductor laser array 1 are guided along optical fibres 2 each having branched ends on which optical couplers 3 are provided, and these couplers 3 are coupled respectively with corresponding optical couplers 5 via an optical gate array 4. Each of the optical couplers 5 is connected to an optical fibre, and the optical fibres are assembled into a reduced number of optical fibres 6 which in turn are connected to a photodetector array 7. The optical gate array 4 selectively allows the passage of the optical beam from the optical coupler 3 to the corresponding optical coupling element 5 and thereby the optical switching of the telecommunication network is achieved.

In such an optical gate array, use of semiconductor material which changes the transmittance of light in response to the carrier density therein is considered for switching the optical beam. Such a semiconductor material reduces the transmittance in response to injection of the carriers and increases the transmittance in response to depletion of the carriers therein. However, such a semiconductor material may lose the capability of switching the optical beam when a light having a large intensity comes in, as such a strong light increases the transmittance unconditionally.

In order to avoid the foregoing problem, use of a movable lens system as shown in Fig. 2 is considered. This movable lens system is used commonly in conventional optical disk recording systems such as compact disk players and comprises a lens 8 held movably on a magnetic or piezoelectric actuator device 9. When using this system in the gate array 4, the lens 8 and the actuator 9 are disposed in a row and column formation in correspondence to the optical couplers 3 and 5, and the optical switching is made in response to the movement of the lens 8. Thus, when the lens 8 is in the on-focus state with respect to the optical couplers 3 and 5 as shown in Fig. 2, the optical beam in the coupler 3 is transferred to the optical coupler 5, when the lens 8 is offset in either direction to the optical coupler 3 or to the optical coupler 5, the transfer of the optical beam is interrupted.

Such a system, although capable of operating properly even when a strong light comes in, has an obvious problem in that it relies upon mechanical movement of the lens 8 for the optical switching and thus has the problem of slow response due to the mechanical inertia of the lens 8. Thus, the use of such a mechanical system for the optical gate array system of optical telecommunication systems for the future optical computers is out of the question.

An optical device which is capable of changing its focal length in response to a control signal at a high speed is desired. Such an optical device would be useful also in other optical systems such as compact disk players or laser printers wherein a laser beam has to be focused on a rotary body rotating at a high speed while maintaining a proper focusing state.

US-A-3790853 discloses a semiconductor optical device comprising: a semiconductor substrate doped to a first conduction type and having an upper, substantially flat, major surface and a lower major surface substantially parallel to the upper major surface, which substrate is optically transparent to light of a preselected wavelength; a first semiconductor layer doped to a second conduction type, different from said first conduction type, having an upper flat major surface and a lower flat major surface extending substantially parallel to one another and to the upper major surface of the said substrate, which layer is optically transparent to the said light; first electrode means provided on the upper major surface of the said first semiconductor layer; and second electrode means provided on the lower major surface of the said substrate so that application of a potential difference between the said first and second electrode means can bring about injection of excess carriers into the semiconductor material of the device, thereby bringing about a change in the refractive index profile across the device.

When in use, US-A-3 790 853 applies a potential difference between first and second electrode means, creating an asymmetrical distribution of refractive index across the device, thereby serving to deflect a light ray passing through the device.

According to a first aspect of the present invention, there is provided a semiconductor optical device comprising: a semiconductor substrate doped to a first conduction type and having an upper, substantially flat, major surface and a lower major surface substantially parallel to the upper major surface, which substrate is optically transparent to light of a preselected wavelength; a first semiconductor layer doped to a second conduction type, different from said first conduction type, having an upper flat major surface and a lower flat major surface extending substantially parallel to one another and to the upper major surface of the said substrate, which layer is optically transparent to the said light; first electrode means provided on the upper major surface of the said first semiconductor layer; and second electrode means provided on the lower major surface of the said substrate so that application of a potential difference between the said first and second electrode means brings about injection of excess carriers into the semiconductor material of the device, thereby bringing about a change in the refractive index profile across the device; characterised in that a further semiconductor layer is provided between the upper major surface of the said substrate and the lower major surface of the said first semiconductor layer, which further semiconductor layer, when a potential difference is applied between the first electrode means and the second electrode means, serves as a recombination region, in which carriers of a first type, injected into the said first semiconductor layer from the said first electrode means, recombine with carriers of a second type, opposite in polarity to the carriers of the said first type, injected into the said substrate from the said second electrode means; the said first electrode means have edge regions formed so as to define a first aperture, being circular or rectangular in shape, through which an optical beam of the said light may pass; the said second electrode means have edge regions formed so as to define a second aperture, similar in shape to the said first aperture, through which the said optical beam may pass; and the said first aperture has a width larger than a characteristic diffusion length in the said first semiconductor layer of carriers of the said first type, so that application of a potential difference between the said first and second electrode means causes the refractive index of different portions of the said recombination region to change to values consistent with a refractive index profile having a maximum value at the central axis of an optical passageway through the device, which passageway has the said first and second apertures as opposite ends thereof, and having minimum values at laterally outermost regions of the passageway, thereby bringing about a change in focusing, by the device, of such an optical beam passing therethrough by way of the said passageway.

According to a second aspect of the present invention, there is provided a semiconductor optical device comprising: a semiconductor substrate doped to a first conduction type and having an upper, substantially flat, major surface and a lower major surface substantially parallel to the upper major surface, which substrate is optically transparent to light of a preselected wavelength; a semiconductor layer, provided on the upper major surface of the said substrate, which semiconductor layer is doped to a second conduction type, different from said first conduction type, has an upper flat major surface substantially parallel to the upper major surface of the said substrate, and is optically transparent to the said light; first electrode means provided on the upper major surface of the said semiconductor layer; and second electrode means, provided on the lower major surface of the said substrate so that application of a potential difference between the said first and second electrode means brings about injection of excess carriers into the semiconductor material of the device, thereby bringing about a change in the refractive index profile across the device; characterised in that the said first electrode means have edge regions formed so as to define a first aperture, being circular or rectangular in form, through which an optical beam of the said light may pass; the said second electrode means have edge regions formed so as to define a second aperture, similar in shape to the said first aperture, through which the said optical beam may pass; and the said first aperture has a width larger than a characteristic diffusion length in the said semiconductor layer of carriers of a first type, so that application of a potential difference between the said first and second electrode means causes the refractive index of different portions of a recombination region of the device, at the interface between the substrate and the said semiconductor layer, in which region carriers of the said first type that are injected into the semiconductor layer from the first electrode means recombine with opposite-polarity carriers that are injected into the substrate from the second electrode means, to change to values consistent with a refractive index profile having a maximum value at the central axis of a optical passageway through the device, which passageway has the said first and second apertures as opposite ends thereof and having minimum values at laterally outermost regions of the passageway, thereby bringing about a change in focusing, by the device, of such an optical beam passing therethrough by way of the said passageway.

According a third aspect of the present invention, there is provided a semiconductor optical device comprising: a semiconductor substrate having an upper, substantially flat, major surface and a lower major surface substantially parallel to the upper major surface, which substrate is optically transparent to light of a preselected wavelength; a quantum well structure provided on the upper major surface of the said substrate and having an upper major surface substantially parallel thereto, which quantum well structure comprises a thin layer of semiconductor material sandwiched between a pair of confinement layers made of semiconductor material having a band gap larger than the band gap of the material of the said thin layer, the thickness of the said thin layer being such that a quantum well is formed therein; an insulating cap layer provided on the upper major surface of the said quantum well structure, which layer is optically transparent to the said light; first electrode means provided on an upper major surface of the said insulating cap layer and having edge regions formed so as to define a first aperture being circular or rectangular in shape, through which an optical beam of the said light may pass; and second electrode provided on the lower major surface of the said substrate and having edge regions formed so as to define a second aperture, similar in shape to the first aperture, through which the said optical beam may pass; whereby an electric field established in the said quantum well structure when a potential difference is applied between the said first electrode means and the said second electrode means causes the refractive index of different portions of the said quantum well structure to change to values consistent with a refractive index profile having a maximum value at the central axis of an optical passageway through the device, which passageway has the said first and second apertures as opposite ends thereof, and having minimum values at laterally outermost regions of the passageway, thereby bringing about a change in focusing, by the device, of such an optical beam passing therethrough by way of the said passageway.

Reference will now be made, by way of example, to the accompanying drawings, in which:

Fig. 1 (described above) is a schematic view showing a future optical telecommunication system proposed previously and in which the use of the present invention is considered;

Fig. 2 (described above) is an optical element used conventionally in optical disk players and of which the use is considered the system of Fig. 1;

Figs. 3A to 3C are respectively a plan view, an axial sectional view and a bottom view of a semiconductor optical device embodying the first aspect of the present invention;

Fig. 4 is a carrier density distribution profile formed in the semiconductor optical device of Figs. 3A to 3C;

Fig. 5 is a refractive index distribution profile formed in the semiconductor optical device of Figs. 3A to 3C in correspondence to the carrier density profile of Fig. 4;

Fig. 6 is an axial sectional view of the semiconductor optical device of Figs. 3A to 3C showing the focusing action of the device similar to a convex lens;

Fig. 7 is an axial sectional view of a device embodying the second aspect of the present invention;

Figs 8A to 8D show respective view of a device embodying the third aspect of the present invention;

Figs. 9A and 9B are diagrams illustrating use of the device of Figs. 8A to 8D.

Fig. 10 is a diagram showing an electric field strength profile induced in the device of Figs. 8A to 8D;

Fig. 11 is a graph showing schematically a change in the refractive index induced in response to the said electric field;

Fig. 12 is an axial sectional view showing a focusing action of the semiconductor optical device of Figs. 8A to 8D; and

Figs. 13A to 13C are diagrams illustrating modified forms of the devices of Figs. 3A to 3C and Figs. 8A to 8D.

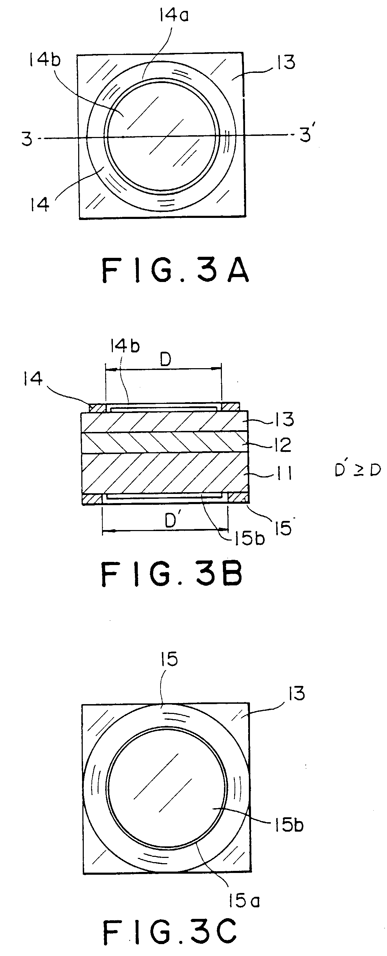

The semiconductor device of Figs. 3A to 3C comprises a semiconductor substrate 11 of n-type indium phosphide (InP) having a thickness of about 100 $\mu$m and doped to an n-type carrier density of $1 \times 10^{18} cm^{-3}$, an n-type semiconductor layer 12 of indium gallium arsenide phosphide (InGaAsP) grown on the substrate 11 with a thickness of 2 $\mu$m and a carrier density of $5 \times 10^{17} cm^{-3}$, and a p-type semiconductor layer 13 of InP grown on the semiconductor layer 12 with a thickness of 2 $\mu$m and a carrier density of $1 \times 10^{18} cm^{-3}$. The substrate 11 and the layer 13 have a band gap of 1.27 eV while the layer 12 has a band gap of 1.17 eV. Thus there is formed a double-hetero structure wherein a layer of small band gap is sandwiched between layers of larger band gap. Thereby, effective confinement of carriers can occur on the layer 12.

On the top surface of the semiconductor layer 13, a first annular electrode 14 of gold is provided, as shown in Fig. 3A, the circular inner aperture or window 14a of which exposes the top surface of the semiconductor layer 13. The window 14a has a diameter D which is larger than the diffusion length, in the layers 12 and 13, of carriers which are injected through the electrode 14 when the device is in use. In the present embodiment which employs an n-type InP substrate 11, the diameter D is chosen to be 40 $\mu$m so as to be sufficiently larger than the diffusion length of holes in InP which is about 10 $\mu$m. Further, the exposed surface of the semiconductor layer 13 within the window 14a is covered by an anti-reflection film 14b of silicon nitride with a thickness of about 2000A (200nm) as shown in the axial sectional view of Fig. 3B.

Fig. 3C shows a bottom view of the structure of Fig. 3B. It can be seen from this drawing that there is provided a second annular electrode 15, of gold, at the bottom surface of the substrate 11, the circular inner aperture of which serves as a window 15a, generally in alignment (i.e. coaxial) with the window 14a, exposing part of the bottom surface of the substrate 11. The window 15a has a diameter D' chosen to be equal to or larger than the diameter D, and the part of the bottom surface exposed by the window 15a is covered by an anti-reflection film 15b as shown in the view of Fig. 3B.

In operation, the first electrode 14 is connected to a positive voltage source and the second electrode 15 is connected to a negative voltage source so that a forward biasing is applied to the semiconductor device. In response to the forward biasing, electrons are injected from the ring-shaped electrode 15 at the bottom of the substrate 11 and the electrons thus injected are diffused into the semiconductor layer 12, passing through the substrate 11. On the other hand, the ring-shaped electrode 14 injects holes into the layer 13 and the holes are diffused into the layer 12 while generally maintaining the ring shaped pattern of the electrode 14 because the diameter D exceeds the diffusion length of holes in the layer 13.

Once the carriers have reached the semiconductor layer 12 forming the central layer of the double-hetero structure, further diffusion of the carriers beyond the layer 12 is prohibited and the carriers diffuse laterally towards a central part of the layer 12 which is coincident with the centre of the circular windows 14a and 15a, while experiencing recombination. Thus, carrier density is decreased as a result of the recombination, and there is formed a lateral carrier density profile N(X) represented as

$$N(X) = A[EXP((-X-R)/L) + EXP((X-R)/L)]$$

wherein X is the distance from the inner rim of the electrode 14a, A is a constant, R stands for the radius of the circular window 14a and L stands for the diffusion length of the holes in the semiconductor layer 12.

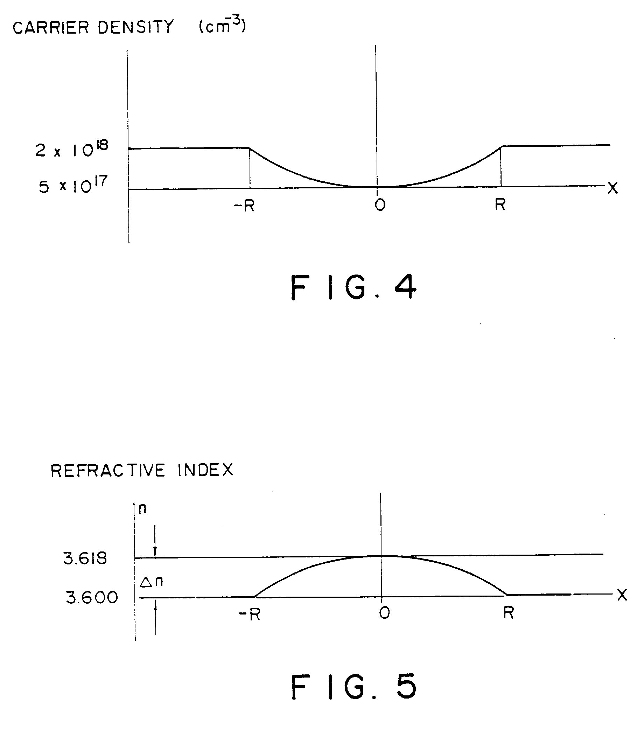

Fig. 4 shows such a distribution of the holes in the layer 12 obtained in response to the injection of the holes and the electrons through the electrodes 14 and 15 with a current density of 10 kA/cm$^{-2}$. This current density is obtained by supplying an overall current of about 40 mA in the case when the openings D and D' have the diameter of 40 $\mu$m.

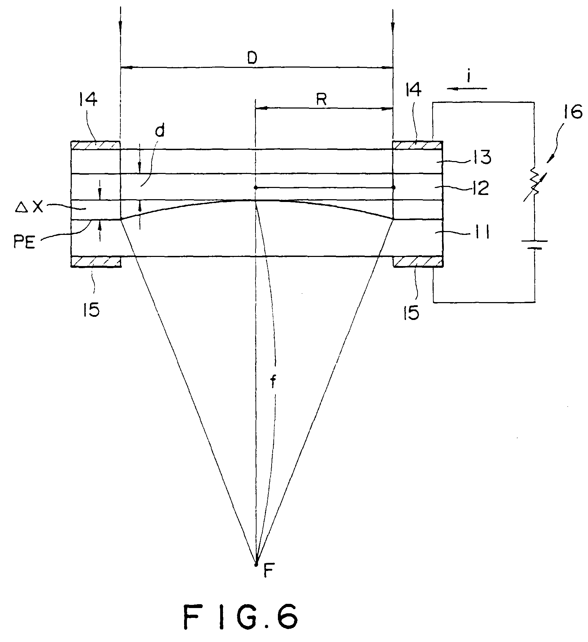

In response to the injection of the carriers as such, a hole density of about $2 \times 10^{18}$cm$^{-3}$ is established in the layer 12 immediately underneath the electrode 14, up to the rim of the opening 14a, and the hole density decreases toward the centre of the opening 14a exponentially in accordance with the foregoing equation with a minimum hole density of about $5 \times 10^{17}$ cm$^{-3}$ at the centre. Thereby a corresponding refractive index profile, as shown in Fig. 5, is obtained with a maximum refractive index of about 3.618 beneath the centre of the opening 14a, i.e. at the central axis of the optical passageway defined between the windows 14a and 15a, and a minimum refractive index of about 3.600 beneath the rim of the opening 14a, i.e. at laterally outermost regions of the said passageway. This refractive index has an exponential profile corresponding to the exponential profile of Fig. 4, enabling the semiconductor device to operate as a convex lens. It should be noted that the exponential profile of the refractive index close approximates a parabolic profile and there appears a focal point F as shown in Fig. 6 at a focal point f of about 2 mm. It should be noted that Fig. 6 shows a spherical wavefront PE induced in the optical beam passed through the layer 12 in response to the forward biasing provided by a biasing circuit 16. As shown in Fig. 6, the wavefront of the optical beam is advanced beneath the edge regions of the opening 14a by $\Delta X = n.\Delta n.d$, where n stands for the refractive index at the centre of the layer 12, d stands for the thickness of the layer 12, and $\Delta n$ represents the decrement of the refractive index at the rim as defined in Fig. 5.

When there is no carrier injection, on the other hand, the carrier distribution profile in the layer 12 becomes flat and takes a value of about $5 \times 10^{17}$cm$^{-3}$ which corresponds to the carrier density at the centre of the opening 14a. In other words, the carrier density at the centre of the opening 14a does not change substantially in response to the injection of the carriers. In correspondence to the flat wavefront of the optical beam, the optical beam passed through the semiconductor device is focused at an infinite distance. In other words, this device operates as a lens which can change its focal length from infinity to about 2mm in response to the carrier injection.

It should be noted that such a semiconductor optical device embodiment the present invention is not limited to one having an n-type layer 12, but may instead use a p-type layer or undoped layer for the layer 12, with substantially the same result.

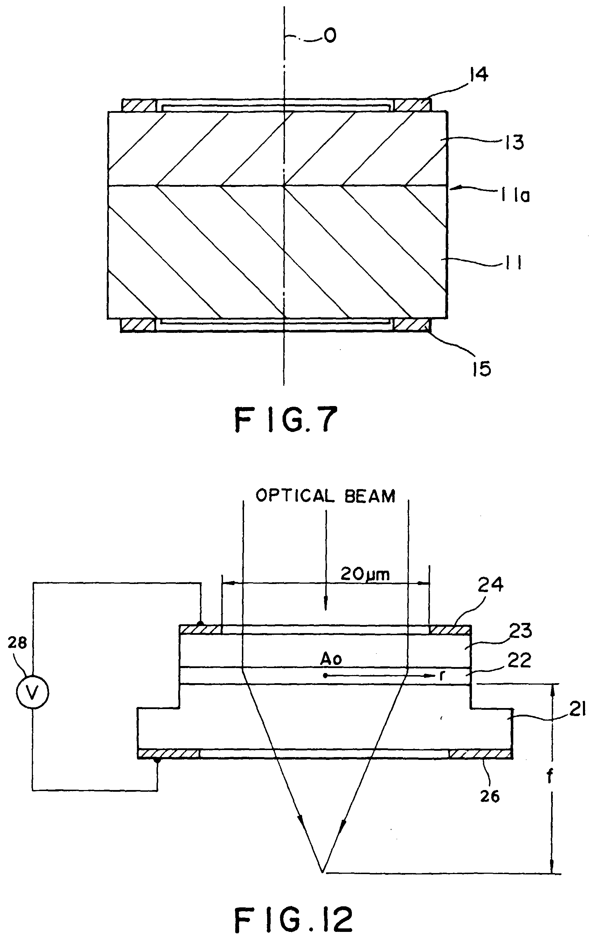

It should be noted that the double-hetero structure used in the semiconductor optical device described above may be eliminated, as shown in Fig. 7. In this case, a p-n junction 11a exists at the interface between substrate 11 and layer 13. The recombination of the electrons and holes occur in the region of the p-n junction 11a, and the profile of the carrier density and the refractive index similar to those chosen in Figs. 4 and 5 appear at the p-n junction 11a.

In the foregoing "current injection type" devices, one may anticipate the possibility that optical radiation may be produced in the semiconductor devices, due to the recombination of the carriers. However, the effect of such optical radiation can be minimised by avoiding the use of the mesa structure which is commonly used in laser diodes for concentrating the carriers in a limited active region of the device. Further, by restricting the wavelength of the optical beam, to be focused by the semiconductor optical device, to a value which does not cause interaction with the material forming the layer 12, the effect of such superfluous optical radiation can be minimized. For example, the semiconductor layer 12, having a band gap of 1.17 eV and producing optical radiation of 1.45$\mu$m wavelength, does not interact with an optical beam at 1.5 $\mu$m which is commonly used for optical telecommunication through optical fibres. When the wavelength of the optical beam is specified, on the other hand, one can avoid the problem of superfluous optical radiation simply by choosing the composition of the layer 12 such that the band gap of the material forming the layer 12 such that the band gap of the material forming the layer 12 provides a radiation wavelength which is smaller than the wavelength of the optical beam to be used. Thus, such optical radiation formed in the device by the recombination of the carriers does not provide any serious effect on the performance of the device. The semiconductor device can therefore have an excellent transparency with respect to an optical beam of 1.5 $\mu$m wavelength.

It should be noted that the structures shown in Fig. 3A to 3C and Fig. 7 differ structurally from a typical photodiode in that the electrode 15 at the bottom of the substrate 11 is configured to allow passage of the optical beam and in that there is no optical absorption region formed therein. As the optical beam is passed through the devices freely, the devices do not operate as photodetecting devices.

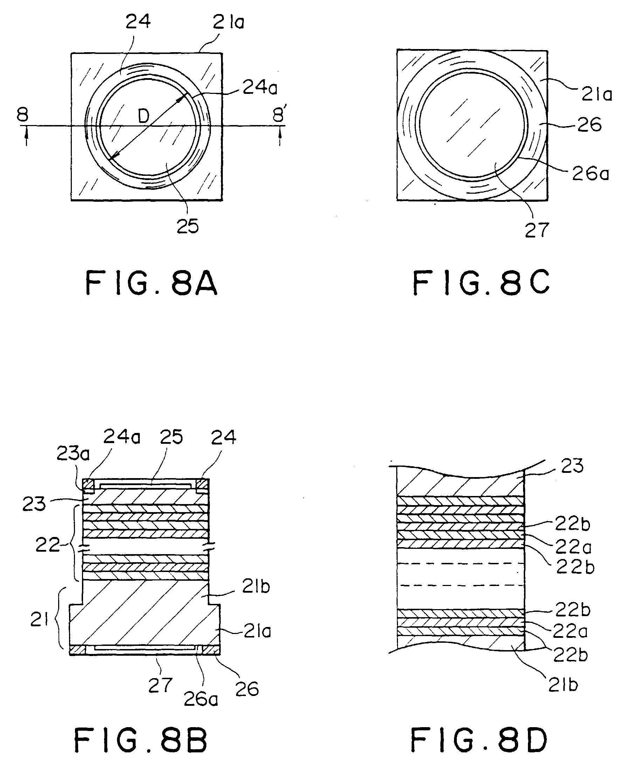

Figs. 8A to 8C show, respectively in the plan view, axial sectional view and from below, an embodiment wherein the problem of the formation of optical radiation in the device can be eliminated. Fig. 8D shows a part of the structure of Fig. 8B to an enlarged scale.

Figs. 8A and 8B illustrate a semiconductor optical device including a substrate 21 of n-type InP doped to an impurity density of $1 \times 10^{18} cm^{-3}$ or more. The substrate 21 is made of a base part 21a, having a rectangular shape in the plane view, and a cylindrical part 21b formed on the base part 21a. On this cylindrical part 21b, a cylindrical multi-quantum well (MQW) structure 22 to be described later is provided, conforming in shape with the cylindrical part 21b, with a thickness of about 1 μm, and a cap layer 23 of undoped InP also having a cylindrical form is provided on the MQW structure 22, conforming in shape with the MQW structure 22, with a thickness of about 4μm. Thereby the overall height of the cylindrical part of the device, including the part 21b of the substrate 21, the MQW structure 22 and the cap layer 23 is set to be 10 μm. On the top surface of the cap layer 23 there is provided a first ring-shaped electrode 24 of gold in correspondence to the outer rim of the cap layer 23. The inner aperture of the ring-shaped electrode 24 is a circular opening 24a with a diameter D of 20 μm and the top surface of the cap layer 23 is exposed through the opening 24a. Further, an anti-reflection film 25 of silicon nitride is deposited on the exposed top surface of the cap layer 23 with a thickness of about 2000A (200 nm). In the cap layer 23, there is provided also a diffusion region 23a, immediately below the ring-shaped electrode 24, wherein the cap layer 23 is doped with p-type impurities to an impurity density of $2 \times 10^{18} cm^{-3}$. The region 23a may be formed by diffusing zinc into the layer 23.

Referring now to Fig. 8C showing the bottom view, there is provided a second ring-shaped electrode 26 of gold, on the bottom of the base part 21a of the substrate 21, having its circular opening 26a generally in alignment with the corresponding circular opening 24a of the electrode 24. The diameter of the opening 24a may be determined to be sufficiently large that the optical beam incident through the opening 24a can emerge through the opening 26a without being obstructed. In the illustrated example, the diameter is set to be 24 μm. It should be noted that the semiconductor device is transparent to an optical beam having a wavelength of about 1.5 μm. In order to facilitate the free passage of the optical beam, another anti-reflection film 27 of silicon nitride is provided in the opening 26a with a thickness of 2000A (200 nm). This enables the optical beam to pass through the device with reduced absorption.

Fig. 8D shows the structure of the MQW structure 22 in detail. As can be seen in the drawing, the structure 22 is formed from a plurality of thin layers 22a and 22b stacked alternately, wherein each layer 22a is formed from indium gallium arsenide phosphide (InGaAsP) with a thickness of 200A (20 nm), and each layer 22b is formed from indium gallium phosphide (InGaP) with a thickness of 200A (20nm). Thus each layer 22a is sandwiched between a pair of layers 22b. As InGaP has a energy gap which is substantially larger than that of InGaAsP, the layer 22b acts as a carrier confinement layer and there is formed a quantum well in the layer 22a because of the reduced thickness of the layer 22a. In the quantum well, a number of discrete quantum levels appear as is well known.

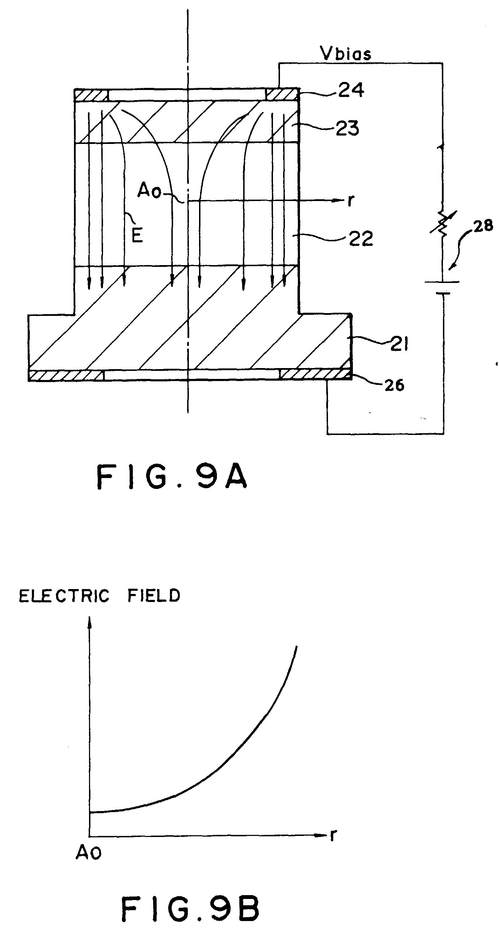

In operation, a bias voltage Vbias is applied between the electrode 24 and the electrode 25 by a biasing circuit 28 as shown in Fig. 9A. In Fig. 9A, only essential parts needed for explanation are illustrated.

In response to the application of the bias voltage Vbias to the electrode 24, an electric field E is established in the device, particularly in the MQW structure 22, as schematically illustrated in Fig. 9A.

As can be seen in Fig. 9A, the lines of electric force extend straight from the electrode 24 to the substrate 21 in the region immediately underneath the electrode 24. It should be noted that the electric potential is substantially constant throughout the substrate 21 because of the high conductivity realised therein by the doping. With increasing separation or distance from the rim of the opening 24a towards the centre, the density of the lines of electric force is decreased generally parabolically as shown in Fig. 9B, wherein the origin of Fig. 9B is chosen to be located at the central axis Ao of the MQW structure 22. When viewed from the axis Ao, the electric field strength increases parabolically towards the laterally outermost regions of the optical passageway defined between the two electrode apertures.

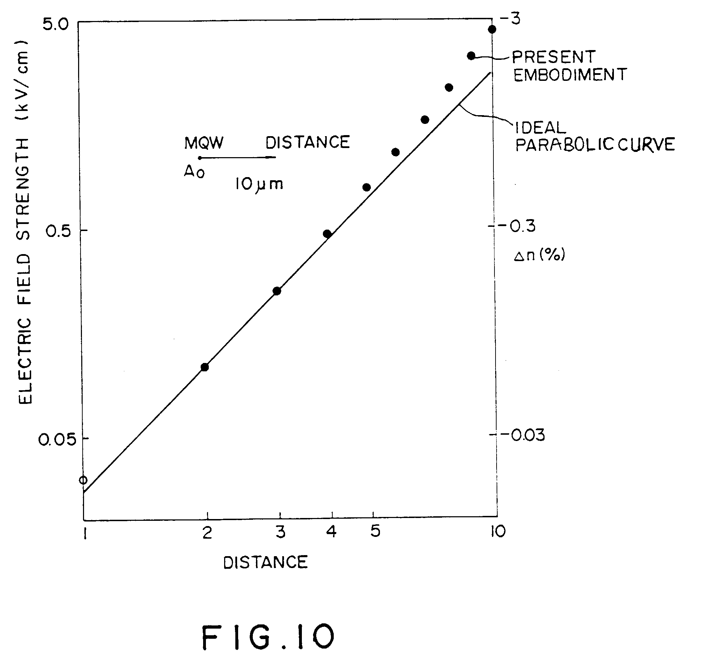

Fig. 10 shows the distribution of the electric field strength appearing in the MQW structure 22 in detail. In this drawing, the abscissa is plotted as a square of distance from the central axis Ao in the radial direction of the structure 22. Thus, the straight line graph in the drawing represents an ideal parabolic profile of the electric field strength. As can be seen from the solid circles representing the actual electric field in the MQW structure 22, the profile of the electric field is closely approximated by the parabolic curve.

It is known that a change of the electric field in a multi-quantum well structure can produce a change in the refractive index, because of the so-called quantum-confined Stark effect.

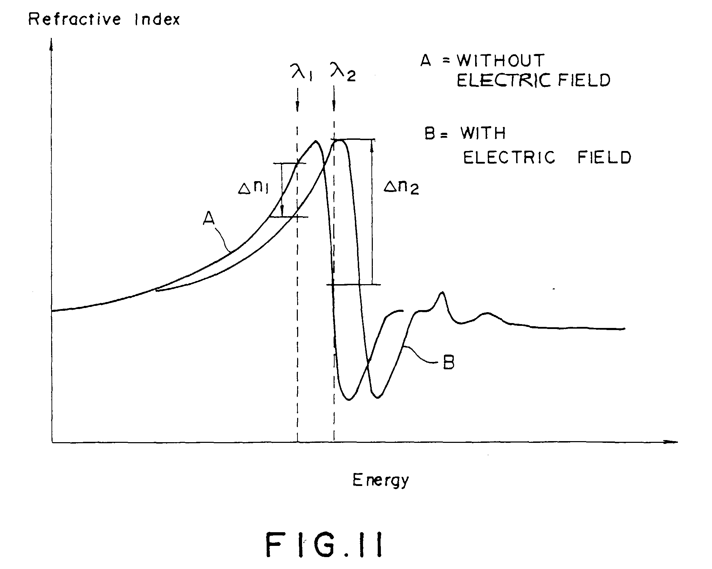

Fig. 11 is a diagram for explaining the quantum-confirmed Stark effect, wherein the refractive index of the multi-quantum well structure is represented as function of the wavelength of the light incident on the multi-quantum well structure. In Fig. 11, the curve designated by "A" represents the refractive index for the case where there is no applied electric field, and the curve designated by "B" represents the refractive index for the case where there is an electric field applied. In the case where light having a wavelength $\lambda_1$ is incident on the multiquantum well structure, it will be seen from this drawing that the refractive index is decreased by $\Delta n_1$ in response to the application of the electric field. In the case where light having a wavelength $\lambda_2$ is incident, on the other hand, there occurs an increase $\Delta n_2$ in the refractive index in response to the application of the electric field.

Thus, in response to the parabolic profile of the electric field in the MQW structure 22, a corresponding parabolic profile of refractive index appears in the MQW structure 22 such that, in the case where an optical beam having a wavelength of about 1.5 μm is incident, the refractive index is maximum at the central axis Ao and minimum at laterally outermost regions of the official passageway through structure 22. Thus the device shown in Figs. 8A to 8D can operate as a convex lens.

In such a semiconductor optical device having the foregoing dimensions (Fig. 12), an optical beam of 1.5μm wavelength is focused at a focal length of f=460μm in response to the application of a bias voltage Vbias of 5 volts. When the device is constructed such that the MQW structure 22 has a thickness of 2 μm and the cap layer 23 has a thickness of 3 μm, the device provides a focal length f of 230 μm in response to a bias voltage of 5 volts. When there is not bias voltage Vbias, the focal point of the semiconductor optical device is located at infinity. Fig. 12 shows the focusing action of the device of Figs. 8A to 8D. It will be noted that the bias voltage Vbias is supplied from the voltage source 28.

In the device of Figs. 8A to 8D, an injection of carriers is not made and, thus, there occurs no recombination of the carriers. The formation of unwanted optical radiation associated with recombination of carriers is thereby eliminated and the signal to noise ratio of the optical beam thus processed by the semiconductor optical device is significantly improved. Further, a wide variation of the focal length from infinity to less than 1 mm can be easily achieved by such a device.

It should be noted that the shape of the electrodes 24 and 25 is not limited to the one described already, but may comprise parallel electrodes with a rectangular passage formed therebetween.

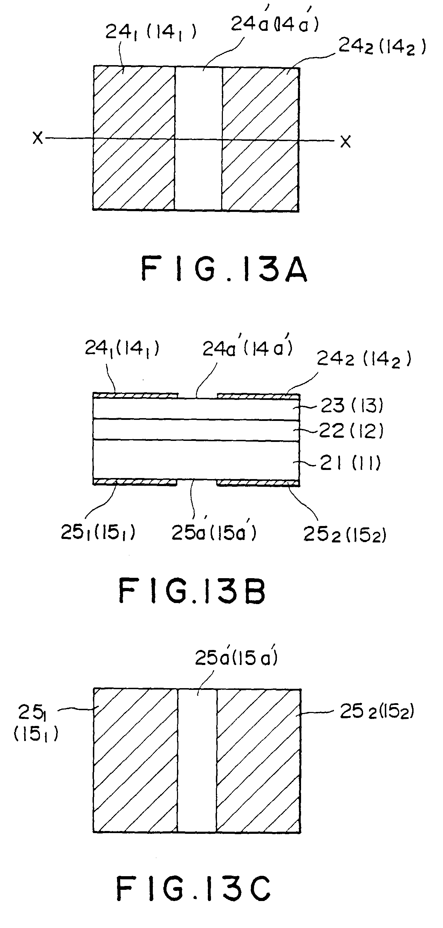

Figs. 13A to 13C shows such an example, wherein the electrode 24 comprises a first rectangular electrode part $24_1$ spaced from a second rectangular electrode part $24_2$ so that a rectangular aperture 24a' is defined therebetween. Further, the electrode 25 comprises a first rectangular electrode part $25_1$ and a second rectangular electrode part $25_2$ with a rectangular aperture 25a' formed therebetween. Other parts of the device are substantially identical to the device of Figs. 8A to 8D, the only difference being that all the layers 21 to 23 have a rectangular shape when viewed in plan. This device operates as a cylindrical lens. As the operation of this device is apparent from the foregoing description, further description thereof will be omitted.

Rectangular electrodes similar to those shown in Figs. 13A to 13C can also be provided on the device of Figs. 3A to 3C relying upon the injection of carriers. Figs. 13A to 13C also show such an example, wherein a pair of electrodes $14_1$ and $14_2$ defining therebetween a rectangular aperture 14a' are provided on the top surface of the semiconductor layer 13. A pair of corresponding electrodes $15_1$ and $15_2$ are also provided on the bottom surface of the substrate with a rectangular aperture 15a' formed between the electrode $15_1$ and $15_2$. Thereby, the device operates as a cylindrical lens.

It should be noted that the device of Fig. 7 operates also as a lens when a reverse biasing is applied across the electrodes 14 and 15. In this case, a refractive index profile symmetrical about the optical axis O is obtained similar to the foregoing case by the Franz-Keldysh effect.

Semiconductor optical devices embodying the present invention may be used effectively in the optical switching system of Fig. 1 by arranging the devices in a row and column formation.

**Claims**

1. A semiconductor optical device comprising:

   a semiconductor substrate (11) doped to a first conduction type and having an upper, substantially flat, major surface and a lower major surface substantially parallel to the upper major surface, which substrate (11) is optically transparent to light of a preselected wavelength;

   a first semiconductor layer (13) doped to a second conduction type, different from said first conduction type, having an upper flat major surface and a lower flat major surface extending substantially parallel to one another and to the upper major surface of the said substrate (11), which layer (13) is optically transparent to the said light;

   first electrode means (14; $14_1$, $14_2$) provided on the upper major surface of the said first semiconductor layer (13); and

   second electrode means (15; $15_1$, $15_2$) provided on the lower major surface of the said substrate (11) so that application of a potential difference between the said first and second electrode means brings about injection of excess carriers into the semiconductor material of the device, thereby bringing about a change in the refractive index profile across the device;

   characterised in that a further semiconductor layer (12) is provided between the upper major surface of the said substrate (11) and the lower major surface of the said first semiconductor layer (13), which further semiconductor layer (12), when a potential difference is applied between the first electrode means and the second electrode means, serves as a recombination region (12), in which carriers of a first type, injected into the said first semiconductor layer (13) from the said first electrode means, recombine with carriers of a second type, opposite in polarity to the carriers of the said first type, injected into the said substrate (11) from the said second electrode means;

the said first electrode means (14) have edge regions formed so as to define a first aperture (14a; 14a'), being circular or rectangular in shape, through which an optical beam of the said light may pass;

the said second electrode means (15; $15_1$, $15_2$) have edge regions formed so as to define a second aperture (15a; 15a'), similar in shape to the said first aperture, through which the said optical beam may pass; and

the said first aperture (14a; 14a ) has a width (D) larger than a characteristic diffusion length in the said first semiconductor layer (13) of carriers of the said first type, so that application of a potential difference between the said first and second electrode means causes the refractive index of different portions of the said recombination region (12) to change to values consistent with a refractive index profile having a maximum value at the central axis of an optical passageway through the device, which passageway has the said first and second apertures as opposite ends thereof, and having minimum values at laterally outermost regions of the passageway, thereby bringing about a change in focusing, by the device, of such an optical beam passing therethrough by way of the said passageway.

2. A semiconductor optical device comprising:

a semiconductor substrate (11) doped to a first conduction type and having an upper, substantially flat, major surface and a lower major surface substantially parallel to the upper major surface, which substrate (11) is optically transparent to light of a preselected wavelength;

a semiconductor layer (13), provided on the upper major surface of the said substrate (11), which semiconductor layer (13) is doped to a second conduction type, different from said first conduction type, has an upper flat major surface substantially parallel to the upper major surface of the said substrate (11), and is optically transparent to the said light;

first electrode means (14; $14_1$, $14_2$) provided on the upper major surface of the said semiconductor layer (13); and

second electrode means (15; $15_1$, $15_2$), provided on the lower major surface of the said substrate (11) so that application of a potential difference between the said first and second electrode means brings about injection of excess carriers into the semiconductor material of the device, thereby bringing about a change in the refractive index profile across the device;

characterised in that the said first electrode means (14) have edge regions formed so as to define a first aperture (14a; 14a'), being circular or rectangular in shape, through which an optical beam of the said light may pass;

the said second electrode means (15; $15_1$, $15_2$) have edge regions formed so as to define a second aperture (15a; 15a'), similar in shape to the said first aperture, through which the said optical beam may pass; and

the said first aperture (14a; 14a') has a width (D) larger than a characteristic diffusion length in the said semiconductor layer (13) of carriers of a first type, so that application of a potential difference between the said first and second electrode means causes the refractive index of different portions of a recombination region (11a) of the device, at the interface between the substrate and the said semiconductor layer, in which region carriers of the said first type that are injected into the semiconductor layer (13) from the first electrode means (14) recombine with opposite-polarity carriers that are injected into the substrate (11) from the second electrode means (15), to change to values consistent with a refractive index profile having a maximum value at the central axis of an optical passageway through the device, which passageway has the said first and second apertures as opposite ends thereof, and having minimum values at laterally outermost regions of the passageway, thereby bringing about a change in focusing, by the device, of such an optical beam passing therethrough by way of the said passageway.

3. A device as claimed in claim 1, wherein the said further semiconductor layer (12) is made of semiconductor material having a band gap smaller than the band gap of the semiconductor material of the said substrate (11) and smaller also than the band gap of the material of the said first semiconductor layer (13).

4. A device as claimed in claim 3, wherein the said further semiconductor layer (12) is made of semiconductor material doped to the said first conduction type.

5. A device as claimed in claim 3, wherein the said further semiconductor layer (12) is made of semiconductor material doped to the said second conduction type.

6. A device as claimed in claim 3, wherein the said further semiconductor layer (12) is made of undoped semiconductor material.

7. A semiconductor optical device comprising:

a semiconductor substrate (21) having an upper, substantially flat, major surface and a lower major surface substantially parallel to the upper major surface, which substrate (21) is optically transparent to light of a preselected wavelength;

a quantum well structure (22) provided on the upper major surface of the said substrate (21) and having an upper major surface substantially parallel thereto, which quantum well structure (22) comprises a thin layer (22a) of semiconductor material sandwiched between a pair of confinement layers (22b) made of semiconductor material having a band gap larger than the band gap of the material of the said thin layer (22a), the thickness of the said thin layer (22a) being such that a quantum well is formed therein;

an insulating cap layer (23) provided on the upper major surface of the said quantum well structure (22), which layer (23) is optically transparent to the said light;

first electrode means (24; $24_1$, $24_2$) provided on an upper major surface of the said insulating cap layer (23) and having edge regions formed so as to define a first aperture (24a; 24a'), being circular or rectangular in shape, through which an optical beam of the said light may pass; and

second electrode means (26; $25_1$, $25_2$) provided on the lower major surface of the said substrate (21) and having edge regions formed so as to define a second aperture (26a; 25a'), similar in shape to the first aperture, through which the said optical beam may pass;

whereby an electric field established in the said quantum well structure (22) when a potential difference is applied between the said first electrode means and the said second electrode means causes the refractive index of different portions of the said quantum well structure (22) to change to values consistent with a refractive index profile having a maximum value at the central axis of an optical passageway through the device, which passageway has the said first and second apertures as opposite ends thereof, and having minimum values at laterally outermost regions of the passageway, thereby bringing about a change in focusing, by the device, of such an optical beam passing therethrough by way of the said passageway.

8. A device as claimed in claim 7, wherein the said quantum well structure (22) comprises a plurality of such thin semiconductor layers (22a), sandwiched between respective such pairs of confinement layers (22b), each of the said thin semiconductor layers having a major surface which is parallel to the upper major surface of the said substrate (21).

9. A device as claimed in claim 7 or 8, wherein the said insulating cap layer (23) is made of undoped semiconductor material.

10. A device as claimed in any preceding claim, wherein the said first electrode means (14; 24) comprise an annular electrode (14; 24), the circular inner aperture (14a; 24a) of which constitutes the said first aperture, and the said second electrode means (15; 25) comprise an annular electrode (15; 25) the circular inner aperture (15a; 25a) of which constitutes the said second aperture and is co-axial with the said first aperture.

11. A device as claimed in any one of claims 1 to 9, wherein the said first (14a'; 24a') and second (15a'; 25a') apertures are rectangular in form.

12. A device as claimed in claim 11, wherein the said first electrode means (14; 24) comprise a pair of rectangular electrodes ($14_1$, $14_2$; $24_1$, $24_2$), spaced apart to define therebetween the said first aperture (14a'; 24a').

13. A device as claimed in any preceding claim, wherein anti-reflection films (14b, 15b; 26, 27) are provided within the said first and second apertures (14a, 14a' ; 24a, 24a' ; 15a, 15a' ; 25a, 25a') for facilitating passage of the said optical beam through the device.

14. A device as claimed in any preceding claim, wherein the said second aperture (15a; 15a'; 25a; 25a') is equal in width to the said first aperture (14a; 14a'; 24a; 24a').

15. A device as claimed in any preceding claim, wherein the said second aperture (15a; 15a'; 25a; 25a') is greater in width than the said first aperture (14a; 14a'; 24a; 24a').

**Patentansprüche**

1. Optische Halbleitervorrichtung mit:

einem Halbleitersubstrat (11), das auf einen ersten Leitungstyp dotiert ist und eine obere, im wesentlichen ebene Hauptoberfläche und eine untere Hauptoberfläche hat, die zu der oberen Hauptoberfläche im wesentlichen parallel ist, welches Substrat (11) gegenüber Licht mit einer im voraus gewählten Wellenlänge optisch transparent ist;
einer ersten Halbleiterschicht (13), die auf einen zweiten Leitungstyp dotiert ist, der sich von dem ersten Leitungstyp unterscheidet, mit einer oberen ebenen Hauptoberfläche und einer unteren ebenen Hauptoberfläche, die sich zueinander und zu der oberen Hauptoberfläche des Substrats (11) im wesentlichen parallel erstrecken, welche Schicht (13) gegenüber dem Licht optisch transparent ist;
einem ersten Elektrodenmittel (14; $14_1$; $14_2$), das auf der oberen Hauptoberfläche der ersten Halbleiterschicht (13) vorgesehen ist; und
einem zweiten Elektrodenmittel (15; $15_1$, $15_2$), das auf der unteren Hauptoberfläche des Substrats (11) vorgesehen ist, so daß die Anwendung einer Potentialdifferenz zwischen den ersten und zweiten Elektrodenmitteln eine Injektion von überschüssigen Trägern in das Halbleitermaterial der Vorrichtung bewirkt, wodurch eine Veränderung des Brechungsindexprofils quer über die Vorrichtung bewirkt wird;

dadurch gekennzeichnet, daß eine weitere Halbleiterschicht (12) zwischen der oberen Hauptoberfläche des Substrats (11) und der unteren Hauptoberfläche der ersten Halbleiterschicht (13) vorgesehen ist, welche weitere Halbleiterschicht (12), wenn eine Potentialdifferenz zwischen dem ersten Elektrodenmittel und dem zweiten Elektrodenmittel angewendet wird, als Rekombinationszone (12) dient, in der Träger eines ersten Typs, die von dem ersten Elektrodenmittel in die erste Halbleiterschicht (13) injiziert wurden, mit Trägern eines zweiten Typs, deren Polarität zu den Trägern des ersten Typs entgegengesetzt ist und die von dem zweiten Elektrodenmittel in das Substrat (11) injiziert wurden, rekombiniert werden;

das erste Elektrodenmittel (14) Kantenzonen hat, die so gebildet sind, um eine erste Apertur (14a; 14a')zu definieren, die eine runde oder rechteckige Form hat, durch die ein optischer Strahl des Lichtes hindurchtreten kann;
das zweite Elektrodenmittel (15; $15_1$, $15_2$) Kantenzonen hat, die so gebildet sind, um eine zweite Apertur (15a; 15a') zu definieren, die in der Form der ersten Apertur ähnlich ist, durch die der optische Strahl hindurchtreten kann; und
die erste Apertur (14a; 14a') eine Breite (D) hat, die größer als eine charakteristische Diffusionslänge in der ersten Halbleiterschicht (13) von Trägern des ersten Typs ist, so daß die Anwendung einer Potentialdifferenz zwischen den ersten und zweiten Elektrodenmitteln verursacht, daß sich der Brechungsindex von verschiedenen Abschnitten der Rekombinationszone (12) auf Werte verändert, die mit einem Brechungsindexprofil übereinstimmen, das einen maximalen Wert an der Zentralachse eines optischen Durchgangsweges durch die Vorrichtung hat, welcher Durchgangsweg die ersten und zweiten Aperturen als gegenüberliegende Enden von sich hat, und minimale Werte an seitlich äußersten Zonen des Durchgangsweges hat, wodurch eine Veränderung beim Fokussieren, durch die Vorrichtung, solch eines optischen Strahls bewirkt wird, der durch den Durchgangsweg durch sie hindurchtritt.

2. Optische Halbleitervorrichtung mit:

einem Halbleitersubstrat (11), das auf einen ersten Leitungstyp dotiert ist und eine obere, im wesentlichen ebene Hauptoberfläche und eine untere Hauptoberfläche hat, die zu der oberen Hauptoberfläche im wesentlichen parallel ist, welches Substrat (11) gegenüber Licht mit einer im voraus gewählten Wellenlänge optisch transparent ist;
einer Halbleiterschicht (13), die auf der oberen Hauptoberfläche des Substrats (11) vorgesehen ist, welche Halbleiterschicht (13) auf einen zweiten Leitungstyp dotiert ist, der sich von dem ersten Leitungstyp unterscheidet, eine obere ebene Hauptoberfläche hat, die zu der oberen Hauptoberfläche des Substrats (11) im wesentlichen parallel ist, und gegenüber dem Licht optisch transparent ist;
einem ersten Elektrodenmittel (14; $14_1$, $14_2$), das auf der oberen Hauptoberfläche der Halbleiterschicht (13) vorgesehen ist; und
einem zweiten Elektrodenmittel (15; $15_1$, $15_2$), das auf der unteren Hauptoberfläche des Substrats (11) vorgesehen ist, so daß die Anwendung einer Potentialdifferenz zwischen den ersten und zweiten Elektrodenmitteln eine Injektion von überschüssigen Trägern in das Halbleitermaterial der Vorrichtung bewirkt, wodurch eine Veränderung des Brechungsindexprofils quer über die Vorrichtung bewirkt wird;

dadurch gekennzeichnet, daß das erste Elektrodenmittel (14) Kantenzonen hat, die so gebildet sind, um eine erste Apertur (14a; 14a') zu definieren, die eine runde oder rechteckige Form hat, durch die ein optischer Strahl des Lichtes hindurchtreten kann;

das zweite Elektrodenmittel (15; $15_1$, $15_2$) Kantenzonen hat, die so gebildet sind, um eine zweite Apertur (15a; 15a') zu definieren, die in der Form der ersten Apertur ähnlich ist, durch die der optische Strahl hindurchtreten kann; und

die erste Apertur (14a; 14a') eine Breite (D) hat, die größer als eine charakteristische Diffusionslänge in der Halbleiterschicht (13) von Trägern eines ersten Typs ist, so daß die Anwendung einer Potentialdifferenz zwischen den ersten und zweiten Elektrodenmitteln verursacht, daß sich der Brechungsindex von verschiedenen Abschnitten einer Rekombinationszone (11a) der Vorrichtung, an der Grenzfläche zwischen dem Substrat und der Halbleiterschicht, in welcher Zone Träger des ersten Typs, die von dem ersten Elektrodenmittel (14) in die Halbleiterschicht (13) injiziert wurden, mit Trägern entgegengesetzter Polarität, die von dem zweiten Elektrodenmittel (15) in das Substrat (11) injiziert wurden, rekombiniert werden, auf Werte verändert, die mit einem Brechungsindexprofil übereinstimmen, das einen maximalen Wert an der Zentralachse eines optischen Durchgangsweges durch die Vorrichtung hat, welcher Durchgangsweg die ersten und zweiten Aperturen als gegenüberliegende Enden von sich hat, und minimale Werte an seitlich äußersten Zonen des Durchgangsweges hat, wodurch eine Veränderung beim Fokussieren, durch die Vorrichtung, solch eines optischen Strahls bewirkt wird, der durch den Durchgangsweg durch sie hindurchtritt.

3. Vorrichtung nach Anspruch 1, bei der die weitere Halbleiterschicht (12) aus Halbleitermaterial ist, das eine Bandlücke hat, die kleiner als die Bandlücke des Halbleitermaterials des Substrats (11) ist und auch kleiner als die Bandlücke des Materials der ersten Halbleiterschicht (13) ist.

4. Vorrichtung nach Anspruch 3, bei der die weitere Halbleiterschicht (12) aus Halbleitermaterial ist, das auf den ersten Leitungstyp dotiert ist.

5. Vorrichtung nach Anspruch 3, bei der die weitere Halbleiterschicht (12) aus Halbleitermaterial ist, das auf den zweiten Leitungstyp dotiert ist.

6. Vorrichtung nach Anspruch 3, bei der die weitere Halbleiterschicht (12) aus undotiertem Halbleitermaterial ist.

7. Optische Halbleitervorrichtung mit:

einem Halbleitersubstrat (21), das eine obere, im wesentlichen ebene Hauptoberfläche und eine untere Hauptoberfläche hat, die zu der oberen Hauptoberfläche im wesentlichen parallel ist, welches Substrat (21) gegenüber Licht mit einer im voraus gewählten Wellenlänge optisch transparent ist;
einer Quantenmuldenstruktur (22), die auf der oberen Hauptoberfläche des Substrats (21) vorgesehen ist und eine obere Hauptoberfläche hat, die zu ihr im wesentlichen parallel ist, welche Quantenmuldenstruktur (22) eine dünne Schicht (22a) aus Halbleitermaterial umfaßt, die zwischen einem Paar von Begrenzungsschichten (22b) aus Halbleitermaterial, das eine Bandlücke hat, die größer als die Bandlücke des Materials der dünnen Schicht (22a) ist, sandwichartig angeordnet ist, welche Dicke der dünnen Schicht (22a) so ist, daß in ihr eine Quantenmulde gebildet wird;
einer Isolierkappenschicht (23), die auf der oberen Hauptoberfläche der Quantenmuldenstruktur (22) vorgesehen ist, welche Schicht (23) gegenüber dem Licht optisch transparent ist;
einem ersten Elektrodenmittel (24; $24_1$, $24_2$), das auf einer oberen Hauptoberfläche der Isolierkappenschicht (23) vorgesehen ist und Kantenzonen hat, die so gebildet sind, um eine erste Apertur (24a; 24a') zu definieren, die eine runde oder rechteckige Form hat, durch die ein optischer Strahl des Lichtes hindurchtreten kann; und
einem zweiten Elektrodenmittel (26; $25_1$, $25_2$), das auf der unteren Hauptoberfläche des Substrats (21) vorgesehen ist und Kantenzonen hat, die so gebildet sind, um eine zweite Apertur ( 26a;25a') zu definieren, die in der Form der ersten Apertur ähnlich ist, durch die der optische Strahl hindurchtreten kann;
wodurch ein elektrisches Feld, das in der Quantenmuldenstruktur (22) aufgebaut wird, wenn eine Potentialdifferenz zwischen dem ersten Elektrodenmittel und dem zweiten Elektrodenmittel angewendet wird, verursacht, daß sich der Brechungsindex von verschiedenen Abschnitten der Quantenmuldenstruktur (22) auf Werte verändert, die mit einem Brechungsindexprofil übereinstimmen, das einen maximalen Wert an der Zentralachse eines optischen Durchgangsweges durch die Vorrichtung hat, welcher Durchgangsweg die ersten und zweiten Aperturen als gegenüberliegende Enden von sich hat, und minimale Werte an seitlich äußersten Zonen des Durchgangsweges hat, wodurch eine Veränderung beim Fokussieren, durch die Vorrichtung, solch eines optischen Strahls bewirkt wird, der durch den Durchgangsweg durch sie hindurchtritt.

8. Vorrichtung nach Anspruch 7, bei der die Quantenmuldenstruktur (22) eine Vielzahl von solchen dünnen Halbleiterschichten (22a) umfaßt, die zwischen jeweiligen solchen Paaren von Begrenzungsschichten (22b) sandwichartig angeordnet sind, von welchen dünnen Halbleiterschichten jede eine Hauptoberfläche hat, die zu der oberen Hauptoberfläche des Substrats (21) parallel ist.

9. Vorrichtung nach Anspruch 7 oder 8, bei der die Isolierkappenschicht (23) aus undotiertem Halbleitermaterial ist.

10. Vorrichtung nach irgendeinem vorhergehenden Anspruch, bei der das erste Elektrodenmittel (14; 24) eine ringförmige Elektrode (14; 24) umfaßt, deren runde innere Apertur (14a; 24a) die erste Apertur bildet, und das zweite Elektrodenmittel (15; 25) eine ringförmige Elektrode (15; 25) umfaßt, deren runde innere Apertur (15a; 25a) die zweite Apertur bildet und mit der ersten Apertur koaxial ist.

11. Vorrichtung nach irgendeinem der Ansprüche 1 bis 9, bei der die ersten (14a'; 24a') und zweiten (15a'; 25a') Aperturen eine rechteckige Form haben.

12. Vorrichtung nach Anspruch 11, bei der das erste Elektrodenmittel (14; 24) ein Paar von rechteckigen Elektroden ($14_1$, $14_2$; $24_1$, $24_2$) umfaßt, die getrennt angeordnet sind, um zwischen sich die erste Apertur (14a'; 24a') zu definieren.

13. Vorrichtung nach irgendeinem vorhergehenden Anspruch, bei der Antireflexionsfilme (14b, 15b; 26, 27) innerhalb der ersten und zweiten Aperturen (14a, 14a'; 24a, 24a'; 15a, 15a'; 25a, 25a') vorgesehen sind, zum Erleichtern des Hindurchtretens des optischen Strahls durch die Vorrichtung.

14. Vorrichtung nach irgendeinem vorhergehenden Anspruch, bei der die zweite Apertur (15a; 15a'; 25a; 25a') der ersten Apertur (14a; 14a'; 24a; 24a') in der Breite gleich ist.

15. Vorrichtung nach irgendeinem vorhergehenden Anspruch, bei der die zweite Apertur (15a; 15a'; 25a;

25a') in der Breite größer als die erste Apertur (14a; 14a'; 24a; 24a') ist.

## Revendications

1. Dispositif optique à semi-conducteur comprenant :

un substrat semi-conducteur (11) dopé pour un premier type de conduction et ayant une face principale supérieure sensiblement plate et une face principale inférieure sensiblement parallèle à la face principale supérieure, lequel substrat (11) est transparent optiquement à de la lumière d'une longueur d'onde présélectionnée ;

une première couche semi-conductrice (13) dopée pour un second type de conduction, différent dudit premier type de conduction, ayant une face principale supérieure plate et une face principale inférieure plate s'étendant sensiblement parallèlement l'une à l'autre et à la face principale supérieure dudit substrat (11), laquelle couche (13) est transparente optiquement à ladite lumière ;

un premier moyen formant électrode (14 ; $14_1$, $14_2$) disposé sur la face principale supérieure de ladite première couche semi-conductrice (13) ; et

un second moyen formant électrode (15 ; $15_1$, $15_2$) disposé sur la face principale inférieure dudit substrat (11) d'une façon telle que l'application d'une différence de potentiel entre lesdits premier et second moyens formant électrodes entraîne l'injection de porteurs en excès dans la matière semi-conductrice du dispositif, en entraînant ainsi une variation du profil d'indice de réfraction dans le dispositif;

caractérisé :

en ce qu'une couche semi-conductrice supplémentaire (12) est disposée entre la face principale supérieure dudit substrat (11) et la face principale inférieure de ladite première couche semi-conductrice (13), laquelle couche semi-conductrice supérieure (12), lorsque l'on applique une différence de potentiel entre le premier moyen formant électrode et le second moyen formant électrode, sert de couche de recombinaison (12), dans laquelle des porteurs d'un premier type, injectés dans ladite première couche semi-conductrice (13) à partir dudit premier moyen formant électrode, se recombinent avec des porteurs d'un second type, de polarité opposée aux porteurs du premier type, injectés dans ledit substrat (11) à partir dudit second moyen formant électrode ;

en ce que ledit premier moyen formant électrode (14) comporte des régions marginales conformées de façon à définir une première ouverture (14a ; 14a'), de forme circulaire ou rectangulaire, par laquelle peut passer un faisceau optique de ladite lumière ;

en ce que ledit second moyen formant électrode (15 ; $15_1$, $15_2$) comporte des régions marginales conformées de façon à définir une seconde ouverture (15a ; 15a'), de forme similaire à ladite première ouverture, par laquelle peut passer ledit faisceau optique ; et

en ce que ladite première ouverture (14a ; 14a') a une largeur (D) plus grande que la longueur de diffusion caractéristique, dans ladite première couche semi-conductrice (13), des porteurs dudit premier type, de façon telle que l'application d'une différence de potentiel entre lesdits premier et second moyens formant électrodes provoque le passage de l'indice de réfraction de parties différentes de ladite région de recombinaison (12) à des valeurs cohérentes avec un profil d'indice de réfraction ayant une valeur maximale au droit de l'axe central d'un conduit optique traversant le dispositif, lequel conduit a, comme extrémités opposées, lesdites première et seconde ouvertures, et ayant des valeurs minimales au droit de régions latéralement le plus à l'extérieur du conduit, en entraînant ainsi une variation de focalisation, par le dispositif, d'un tel faisceau optique le traversant en passant par ledit conduit.

2. Dispositif optique à semi-conducteur comprenant :

un substrat semi-conducteur (11) dopé pour un premier type de conduction et ayant une face principale supérieure sensiblement plate et une face principale inférieure sensiblement parallèle à la face principale supérieure, lequel substrat (11) est transparent optiquement à de la lumière d'une longueur d'onde présélectionnée ;

une couche semi-conductrice (13), disposée sur la face principale supérieure dudit substrat (11), laquelle couche semi-conductrice (13) est dopée pour un second type de conduction, différent dudit premier type de conduction, a une face principale supérieure plate sensiblement parallèle à la face principale supérieure dudit substrat (11), et est transparente optiquement à ladite lumière ;

un premier moyen formant électrode (14 ; $14_1$, $14_2$) disposé sur la face principale supérieure de ladite première couche semi-conductrice (13) ; et

un second moyen formant électrode (15 ; $15_1$, $15_2$) disposé sur la face principale inférieure dudit substrat (11) d'une façon telle que l'application d'une différence de potentiel entre lesdits premier et second moyens formant électrodes entraîne l'injection de porteurs en excès dans la matière semi-conductrice du dispositif, en entraînant ainsi une variation du profil d'indice de réfraction dans le dispositif;

caractérisé:

en ce que ledit premier moyen formant électrode (14) comporte des régions marginales conformées de façon à définir une première ouverture (14a ; 14a'), de forme circulaire ou rectangulaire, par laquelle peut passer un faisceau optique de ladite lumière ;

en ce que ledit second moyen formant électrode (15 ; $15_1$, $15_2$) comporte des régions marginales conformées de façon à définir une seconde ouverture (15a ; 15a'), de forme similaire à ladite première ouverture, par laquelle peut passer ledit faisceau optique ; et

en ce que ladite première ouverture (14a ; 14a') a une largeur (D) plus grande que la longueur de diffusion caractéristique, dans ladite couche semi-conductrice (13), de porteurs d'un premier type, de façon telle que l'application d'une différence de potentiel entre lesdits premier et second moyens formant électrodes provoque le passage de l'indice de réfraction de parties différentes d'une région de recombinaison (11a) du dispositif, à l'interface entre le substrat et ladite couche semi-conductrice, dans laquelle région des porteurs dudit premier type qui sont injectés dans la couche semi-conductrice (13) à partir du premier moyen formant électrode (14) se recombinent avec des porteurs de polarité opposée qui sont injectés dans le substrat (11) à partir du second moyen formant électrode (15), à des valeurs cohérentes avec un profil d'indice de réfraction ayant une valeur maximale au droit de l'axe central d'un conduit optique traversant le dispositif, lequel conduit a, comme extrémités opposées, lesdites première et seconde ouvertures, et ayant des valeurs minimales au droit de régions latéralement le plus à l'extérieur du conduit, en entraînant ainsi une variation de focalisation, par le dispositif, d'un tel faisceau optique le traversant en passant par ledit conduit.

3. Dispositif selon la revendication 1, dans lequel ladite couche semi-conductrice supplémentaire (12) est faite d'une matière semi-conductrice ayant une bande interdite plus petite que la bande interdite de la matière semi-conductrice dudit substrat (11) et plus petite également que la bande interdite de la matière de ladite première couche semi-conductrice (13).

4. Dispositif selon la revendication 3, dans lequel ladite couche semi-conductrice supplémentaire (12) est faite d'une matière semi-conductrice dopée pour ledit premier type de conduction.

5. Dispositif selon la revendication 3, dans lequel ladite couche semi-conductrice supplémentaire (12) est faite d'une matière semi-conductrice dopée pour ledit second type de conduction.

6. Dispositif selon la revendication 3, dans lequel ladite couche semi-conductrice supplémentaire (12) est faite d'une matière semi-conductrice non dopée.

7. Dispositif optique à semi-conducteur comprenant :

un substrat semi-conducteur (21) ayant une face principale supérieure sensiblement plate et une face principale inférieure sensiblement parallèle à la face principale supérieure, lequel substrat (21) est transparent optiquement à de la lumière d'une longueur d'onde présélectionnée ;

une structure de puits quantique (22) disposée sur la face principale supérieure dudit substrat (21) et ayant une face principale supérieure qui lui est sensiblement parallèle, laquelle structure de puits quantique (22) comprend une couche mince (22a) de matière semi-conductrice prise en sandwich entre une paire de couches de confinement (22b) faites de matière semi-conductrice ayant une bande interdite plus grande que la bande interdite de la matière de ladite couche mince (22a), l'épaisseur de ladite couche mince (22a) étant telle qu'il s'y forme un puits quantique ;

une couche isolante de recouvrement (23) disposée sur la face principale supérieure de ladite structure de puits quantique (22), laquelle couche (23) est transparente optiquement à ladite lumière ;

un premier moyen formant électrode (24 ; $24_1$, $24_2$) disposé sur une face principale supérieure de ladite couche isolante de recouvrement (23) et ayant une première ouverture (24a ; 24a'), de forme circulaire ou rectangulaire, par laquelle peut passer un faisceau optique de ladite lumière ; et

un second moyen formant électrode (26 ; $25_1$, $25_2$) disposé sur la face principale inférieure dudit substrat (21) et ayant une seconde ouverture (26a; 25a'), de forme similaire à ladite première ouverture, par laquelle peut passer ledit faisceau optique ;

ce par quoi un champ électrique établi dans ladite structure de puits quantique (22), lorsque l'on applique une différence de potentiel entre ledit premier moyen formant électrode et ledit second moyen formant électrode provoque le passage de l'indice de réfraction de différentes parties de ladite structure de puits quantique (22) à des valeurs cohérentes avec un profil d'indice de réfraction ayant une valeur maximale au droit de l'axe central d'un conduit optique traversant le dispositif, lequel conduit a, comme extrémités opposées, lesdites première et seconde ouvertures, et ayant des valeurs minimales au droit de régions latéralement le plus à l'extérieur du conduit, en entraînant ainsi une variation de focalisation, par le dispositif, d'un tel faisceau optique le traversant en passant par ledit conduit.

8. Dispositif selon la revendication 7, dans lequel ladite structure de puits quantique (22) comprend plusieurs couches minces semi-conductrices (22a) du type mentionné, prises en sandwich entre de telles paires respectives de couches de confinement (22b), chacune desdites couches minces semi-conductrices ayant une face principale qui est parallèle à la face principale supérieure dudit substrat (21).

9. dispositif selon la revendication 7 ou 8, dans lequel ladite couche isolante de recouvrement (23) est faite de matière semi-conductrice non dopée.

10. Dispositif selon l'une quelconque des revendications précédentes, dans lequel ledit premier moyen formant électrode (14 ; 24) comprend une électrode annulaire (14 ; 24), dont l'ouverture circulaire intérieure (14a ; 24a) constitue ladite première ouverture, et dans lequel ledit second moyen formant électrode (15 ; 25) comprend une électrode annulaire (15 ; 25) dont l'ouverture circulaire intérieure (15a ; 25a) constitue ladite seconde ouverture et est coaxiale avec ladite première ouverture.

11. Dispositif selon l'une quelconque des revendications 1 à 9, dans lequel lesdites première (14a' ; 24a') et seconde (15a' ; 25a') ouvertures sont de

14

forme rectangulaire.

**12.** Dispositif selon la revendication 11, dans lequel ledit premier moyen formant électrode (14 ; 24) comprend une paire d'électrodes rectangulaires ($14_1$, $14_2$ ; $24_1$, $24_2$), espacées pour définir entre elles ladite première ouverture (14a' ; 24a').

**13.** Dispositif selon l'une quelconque des revendications précédentes, dans lequel des films antireflet (14b, 15b ; 26, 27) sont disposés à l'intérieur desdites première et seconde ouvertures (14a, 14a' ; 24a, 24a' ; 15a, 15a'; 25a, 25a') pour faciliter le passage dudit faisceau optique à travers le dispositif.

**14.** Dispositif selon l'une quelconque des revendications précédentes, dans lequel ladite seconde ouverture (15a ; 15a' ; 25a ; 25a') est de largeur égale à ladite première ouverture (14a, 14a' ; 24a ; 24a').

**15.** Dispositif selon l'une quelconque des revendications précédentes, dans lequel ladite seconde ouverture (15a ; 15a' ; 25a ; 25a') a une largeur plus grande que ladite première ouverture (14a, 14a' ; 24a ; 24a').

PRIOR ART

FIG. 1

PRIOR ART

FIG. 2

14a

14b

13

3 - - - 3'

14

# F I G. 3 A

14b

D

14

13

12

11

D'

15b   15

$D' \geq D$

# F I G. 3 B

15

13

15b

15a

# F I G. 3 C

CARRIER DENSITY  $(cm^{-3})$

$2 \times 10^{18}$

$5 \times 10^{17}$

-R    O    R    X

# FIG. 4

REFRACTIVE INDEX

n

3.618

$\Delta n$

3.600

-R    O    R    X

# FIG. 5

F I G.6

EP 0 409 605 B1

FIG.7

OPTICAL BEAM

20μm

FIG.12

FIG. 8A

FIG. 8C

FIG. 8B

FIG. 8D

FIG. 9A

ELECTRIC FIELD

FIG. 9B

FIG.10

Refractive Index

$\lambda_1$  $\lambda_2$

A = WITHOUT ELECTRIC FIELD

B = WITH ELECTRIC FIELD

$\Delta n_1$

A

$\Delta n_2$

B

Energy

FIG.11

$24_1 (14_1)$   $24a'(14a')$   $24_2(14_2)$

X————————X

# F I G. I3A

$24_1(14_1)$   $24a'(14a')$   $24_2(14_2)$

23 (13)
22 (12)
21 (11)

$25_1(15_1)$   $25a'(15a')$   $25_2(15_2)$

# F I G. I3B

$25a'(15a')$

$25_1$
$(15_1)$   $25_2(15_2)$

# F I G. I3C